(19) Europäisches Patentamt
European Patent Office
Office européen des brevets

(11) **EP 2 761 768 B1**

(12) **EUROPEAN PATENT SPECIFICATION**

(45) Date of publication and mention
of the grant of the patent:
**13.06.2018 Bulletin 2018/24**

(21) Application number: **12750832.3**

(22) Date of filing: **26.06.2012**

(51) Int Cl.:
**H04B 5/00** (2006.01)

(86) International application number:
**PCT/JP2012/066827**

(87) International publication number:
**WO 2013/046839 (04.04.2013 Gazette 2013/14)**

(54) **WIRELESS POWER TRANSMISSION SYSTEM, POWER TRANSMISSION APPARATUS AND POWER RECEPTION APPARATUS**

DRAHTLOSES STROMÜBERTRAGUNGSSYSTEM, STROMÜBERTRAGUNGSVORRICHTUNG UND STROMEMPFANGSVORRICHTUNG

SYSTÈME D'ÉMISSION D'ÉLECTRICITÉ SANS FIL, APPAREIL D'ÉMISSION D'ÉLECTRICITÉ ET APPAREIL DE RÉCEPTION D'ÉLECTRICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011 JP 2011209904**

(43) Date of publication of application:
**06.08.2014 Bulletin 2014/32**

(73) Proprietor: **Kabushiki Kaisha Toshiba**
**Minato-ku, Tokyo 105-8001 (JP)**

(72) Inventors:
• **SHIJO, Tetsu**
**Tokyo 105-8001 (JP)**
• **SHE, Yuanfeng**
**Tokyo 152-8550 (JP)**
• **OBAYASHI, Shuichi**
**Tokyo 105-8001 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 385 120       WO-A1-2010/006078**
**JP-A- 2004 343 410     US-A1- 2011 133 569**

## Description

Field

Embodiments described herein relate generally to wireless power transmission.

Background

Conventionally, a system for transmitting power wirelessly by a magnetic field coupling between a power transmission resonator and a power reception resonator having the same resonant frequency has been proposed. However, efficiency of such a wireless power transmission system is affected by mutual inductance between a power transmission resonator and a power reception resonator. For example, efficiency of power transmission can be degraded by change in transmission conditions.

Citation List

Patent Literature

Patent literature 1: Jpn. PCT National Publication

Non Patent Literature

Non patent literature 1: "Wireless Power Transfer via Strongly Coupled Magnetic Resonances", Science, 6 July 2007: Vol. 37 No. 5834 pp. 83-86
Non patent literature 2: Hermann A. Haus and Weiping Huang, "Coupled-Mode Theory", Proceedings of the IEEE, Vol. 79, No. 10, Oct. 1991

US-A1-2011133569 discloses a wireless power transmission device and wireless power reception device. A power-relaying resonant coil is disposed between a power transmitter and a power receiver to increase transmission efficiency and lengthen a transmission distance. The wireless power transmission device includes a power generation module for generating power, a power coil for receiving the power, a transmitting coil for resonating at the unique resonant frequency due to magnetic induction with the power coil and generating a non-radiative electromagnetic wave, and one or more power relay coils for relaying the non-radiative electromagnetic wave.
EP-A1-1385120 discloses that when an IC card module is used for a small portable information apparatus such as a portable telephone terminal, the module has a size much smaller than an ordinary IC card from the viewpoint that the apparatus is required to be small in size and weight. In the case of a small non-contact type card, there are problems that an antenna coil cannot secure its necessary surface area, a necessary power cannot be obtained for a signal to be transmitted or received, a communication distance from an external device becomes small. When the signal is transmitted and received via a booster coil provided between the external device and the antenna coil of the IC card module, the effective surface area of the antenna coil can be increased and the communication distance can be increased to a level as large as it can practically avoid involvement of any problem.
JP-A-2004343410 discloses a non-contact communication type information carrier with a wide communication band and excellent versatility. The non-contact communication type information carrier is constituted of a semiconductor chip where an antenna coil is integrally formed, a booster coil electromagnetically inductively coupled with the antenna coil integrally formed on the semiconductor chip and the antenna coil provided in a reader-writer, and an insulating member carrying the semiconductor chip and the booster coil. The booster coil is constituted of a plurality of coils and of mutually different resonance frequencies, electromagnetically inductively coupled with each other.
WO-A1-2010006078 discloses an improved battery-charging system for a vehicle. Primary and secondary coils are located in places where the vehicle can receive power from the primary coil by pulling into a parking space, for example. The parking space may have a coil embedded in the ground, or may have an array of coils embedded in the ground. A guidance system is disclosed. Fine positioning is also disclosed. The secondary coil in the vehicle can also be raised or lowered to improve coupling.

Summary

The present invention provides a wireless power transmission system according to Claim 1.

The present invention also provides a wireless power transmission system according to Claim 2.

The present invention also provides a power reception apparatus according to Claim 7.

The present invention also provides a power reception apparatus according to Claim 8.

The present invention also provides a power transmission apparatus according to Claim 10.

The present invention also provides a power transmission apparatus according to Claim 11.

Brief Description of the Drawings

FIG. 1 is a diagram illustrating a wireless power transmission system according to the first embodiment.

FIG. 2 is a diagram illustrating a wireless power transmission system without an adjustment circuit and a mutual inductance adjuster.

FIG. 3 is a diagram illustrating an equivalent circuit of the wireless power transmission system of FIG. 2.

FIG. 4 is a graph illustrating a frequency characteristic of a transmission efficiency of the equivalent circuit show in FIG. 3.

FIG. 5 is the equivalent circuit of the wireless power transmission system of FIG. 1.

FIG. 6 is a graph illustrating a frequency characteristic of a transmission efficiency of the equivalent circuit shown in FIG. 5.

FIG. 7 is a wireless power transmission system according to the second embodiment.

FIG. 8 is a wireless power transmission system according to the third embodiment.

Detailed Description

In the following, the embodiments will be explained with reference to the drawings. In the description below, the same elements are denoted by the same respective reference numbers. Redundant explanation will be omitted.

In general, according to one embodiment, a wireless power transmission system includes a first resonator, a second resonator, an adjustment circuit and an adjuster. The first resonator includes a first inductor and has a first resonant frequency. The second resonator includes a second inductor and has the first resonant frequency. The adjustment circuit includes a third inductor that receives AC power from the first inductor through a coupling with a first mutual inductance, a fourth inductor transmitting the AC power to the second inductor through a coupling with a second mutual inductance, and a capacitor being connected in series with the third inductor and the fourth inductor. The adjuster adjusts at least either one of the first mutual inductance or the second mutual inductance.

(First Embodiment)

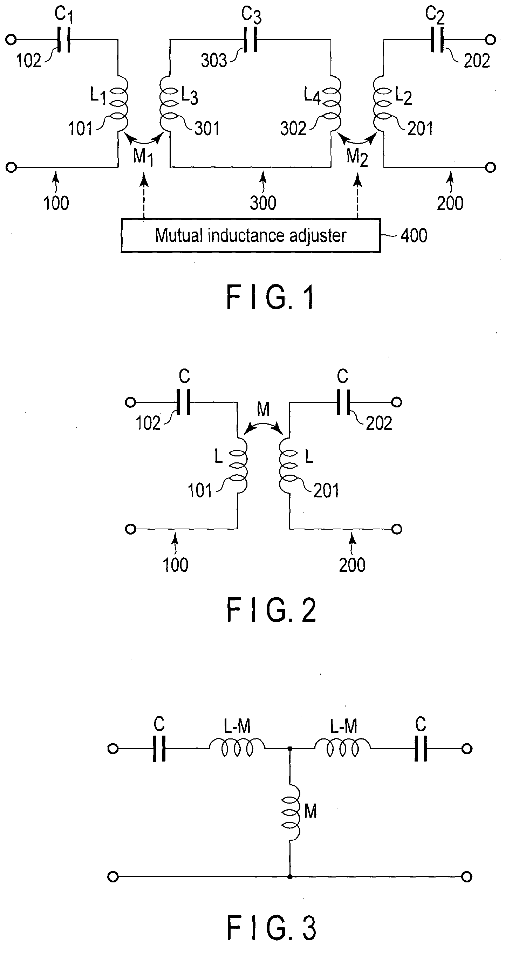

As shown in FIG. 1, the wireless power transmission system according to the first embodiment comprises a resonator 100 (on a power transmission side), an adjustment circuit 300, a resonator 200 (on a power reception side), and a mutual inductance adjuster 400. The resonator 100 is incorporated in a power transmission apparatus. The resonator 200 is incorporated in a power reception apparatus. The adjustment circuit 300 is incorporated in either the power transmission apparatus or the power reception apparatus.

The resonator 100 comprises an inductor 101 and a capacitor 102, and has a predetermined resonant frequency ($= \omega_0$). The inductance of the inductor 101 is equal to $L_1$, and the capacitance of the capacitor 102 is equal to $C_1$. The resonant frequency ($= \omega_0$) is determined by the inductance ($= L_1$) and the capacitance ($= C_1$) of the resonator 100.

Generally, a capacitance of a resonator can be compensated for by a parasitic capacitor of the resonator. In such a case, a capacitor as a circuit component can be omitted from constituent elements of a resonator. For example, if a resonator includes an inductor corresponding to a self-resonant inductor, a capacitor as a circuit component may become unnecessary.

The resonator 200 comprises an inductor 201 and a capacitor 202, and has a predetermined resonant frequency ($= \omega_0$). The inductance of the inductor 201 is equal to $L_2$, and the capacitance of the capacitor 202 is equal to $C_2$. The resonant frequency ($= \omega_0$) is determined by the inductance ($= L_2$) and the capacitance ($= C_2$) of the resonator 200. That is, $C_2 L_2 = C_1 L_1$.

The adjustment circuit 300 comprises inductors 301, 302 and a capacitor 303. The inductance of the inductor 301 is equal to $L_3$, the inductance of the inductor 302 is equal to $L_4$, and the capacitance of the capacitor 303 is equal to $C_3$. As shown in FIG. 1, the capacitor 303 is connected in series with the inductor 301, and also to the inductor 302. More specifically, in the adjustment circuit 300, one end of the capacitor 303 is connected to one end of the inductor 301, and the other end of the capacitor 303 is connected to one end of the inductor 302, and the other end of the inductor 301 is connected to the other end of the inductor 302 are connected.

The inductor 301 receives an alternating-current (AC) power from the inductor 101 via a coupling with a first mutual inductance (= $M_1$). On the other hand, the inductor 302 transmits the AC power to the inductor 201 via a coupling with a second mutual inductance (= $M_2$).

The resonator 100 may receive AC power from a power source via wirings, or may receive AC power wirelessly from a loop element directly or indirectly connected to a power source. Similarly, the resonator 200 may supply AC power to a rectifier and a load (e.g., a circuit, a battery, etc.) via wirings, or may supply AC power wirelessly to a loop element directly or indirectly connected to a rectifier and a load.

The mutual inductance adjuster 400 can adjust at least either one of the first mutual inductance (= $M_1$) and the second mutual inductance (= $M_2$). For example, the mutual inductance adjuster 400 brings either one of the mutual inductances closer to the other mutual inductance. The details of the mutual inductance adjuster 400 will be described later.

In the following, the technical significance of the adjustment circuit 300 and the mutual inductance adjuster 400 will be explained.

First, power transmission efficiency when the adjustment circuit 300 and the mutual inductance adjuster 400 are removed from the wireless power transmission system illustrated in FIG. 1 is considered. As illustrated in FIG. 2, for example, a wireless power transmission system including the resonator 100 and the resonator 200 can be assumed. In the wireless power transmission system, AC power is transmitted by a magnetic field coupling between the inductor 101 and the inductor 201. For brevity, it is assumed that the inductance of the inductor 101 and the inductor 201 is equal to L, and the capacitance of the capacitor 102 and the capacitor 202 is equal to C. The resonant frequency $\omega_0$ of the resonator 100 and the resonator 200 can be given by Expression 1 below:

$$\omega_0 = \frac{1}{\sqrt{CL}} \qquad\qquad (1)$$

Further, it is assumed that the mutual inductance associated with the magnetic field coupling of the inductor 101 and the inductor 201 is equal to M.

Based on the above assumptions, the equivalent circuit shown in FIG. 3 can be derived from the wireless power transmission system shown in FIG. 2.

There are two resonant frequencies in the equivalent circuit, and they can be given by Expressions 2 and 3 below:

$$\omega_1 = \frac{1}{\sqrt{C(L + M)}} \qquad\qquad (2)$$

$$\omega_2 = \frac{1}{\sqrt{C(L - M)}} \qquad\qquad (3)$$

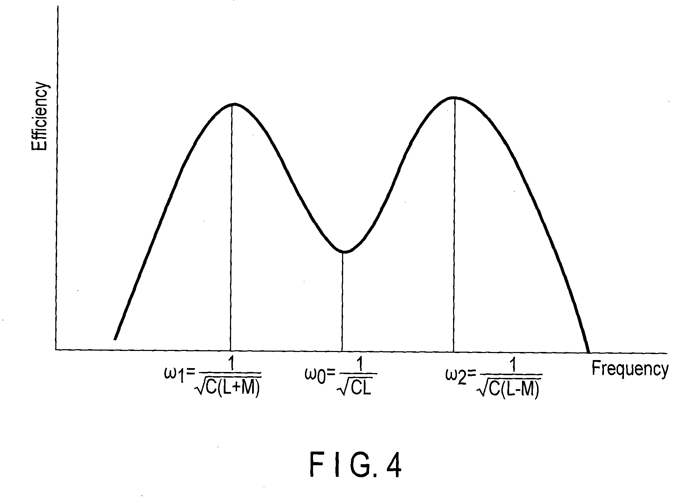

Each of the resonant frequencies ($\omega_1$, $\omega_2$) of the equivalent circuit shown in FIG. 3 does not match with the predetermined resonant frequency ($\omega_0$). Thus, as shown in FIG. 4, the transmission efficiency of the equivalent circuit shown in FIG. 3 does not show a peak at the predetermined resonant frequency ($\omega_0$). Moreover, if the mutual inductance (M) increases in accordance with a change in transmission conditions, the transmission efficiency at the predetermined resonant frequency ($\omega_0$) will be further degraded.

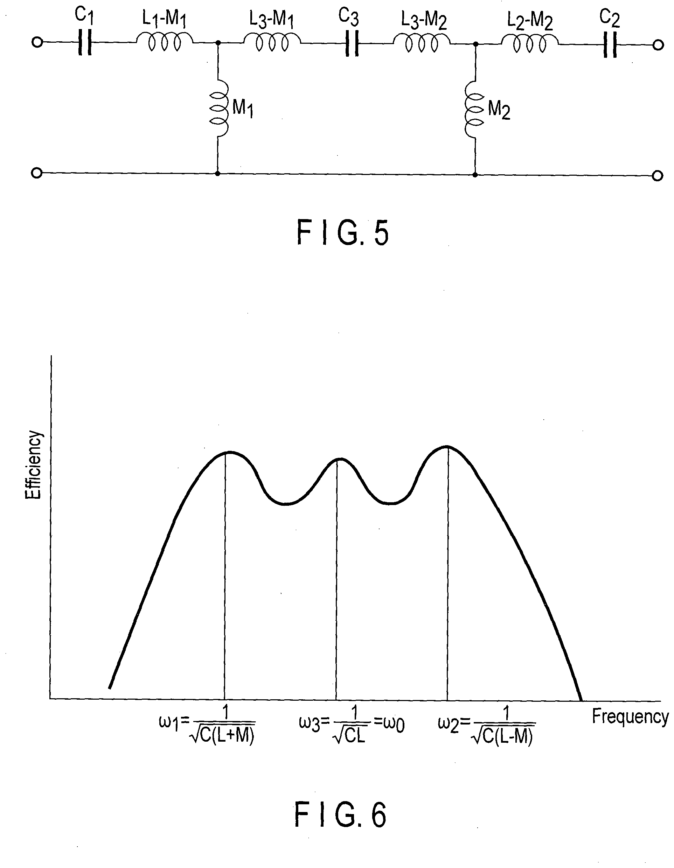

Next, power transmission efficiency in the wireless power transmission system in FIG. 1 is considered. It is assumed that both of the first mutual inductance ($M_1$) and the second mutual inductance ($M_2$) have been adjusted by the operation of the mutual inductance adjuster 400. Accordingly, the equivalent circuit of the wireless power transmission system shown in FIG. 1 (i.e., the resonators 100, 200 and the adjustment circuit 300) can be derived as shown in FIG. 5.

For brevity, it is assumed that $L_1 = L_2 = L_3 = L_4$, $C_1 = C_2 = 2C_3 = C$, and $M_1 = M_2 = M$. Both of the first mutual inductance ($M_1$) and the second mutual inductance ($M_2$) may vary in accordance with transmission conditions; however, they can be in agreement by the operation of the mutual inductance adjuster 400.

Based on the above assumptions, the resonant conditions at the equivalent circuit shown in FIG. 5 can be given by Expression 4 below:

$$\frac{1}{j\omega C} + j\omega(L-M) + \cfrac{1}{\cfrac{1}{j\omega M} + \cfrac{1}{\cfrac{2}{j\omega C} + j\omega(2L-2M) + \cfrac{1}{\cfrac{1}{j\omega M} + \cfrac{1}{\cfrac{1}{j\omega C} + j\omega(L-M)}}}} = 0 \qquad (4)$$

Three resonant frequencies can be obtained by solving Expression 4. More specifically, $\omega_1$ and $\omega_2$ as given by Expressions 2 and 3, and $\omega_3$ as given by Expression 5 below can be obtained:

$$\omega_3 = \frac{1}{\sqrt{CL}} \qquad (5)$$

As is apparent from Expression 5, $\omega_3$ is equal to the predetermined resonant frequency ($\omega_0$). In other words, one of the resonant frequencies ($\omega_3$) of the equivalent circuit shown in FIG. 5 is equal to the predetermined frequency ($\omega_0$). Thus, as shown in FIG. 6, the transmission efficiency of the equivalent circuit shown in FIG. 5 shows a peak at the predetermined resonant frequency ($\omega_0$). Further, even when the mutual inductance (M) changes in accordance with a change in transmission conditions, the first mutual inductance ($M_1$) and the second mutual inductance ($M_2$) can be in agreement by the operation of the mutual inductance adjuster 400. In other words, one of the resonant frequencies ($\omega_3$) at the equivalent circuit shown in FIG. 5 matches with the predetermined resonant frequency ($\omega_0$) with stability, and thus, high transmission efficiency can be maintained.

In the above explanation, it is assumed that $L_1 = L_2 = L_3 = L_4 = L$, and $C_1 = C_2 = 2C_3$ to simplify the calculation. However, the values can be freely determined as long as Expressions 6 and 7 below are satisfied. For example, the inductors 101, 201, 301 and 302 may have different shapes.

$$\omega_0 = \frac{1}{\sqrt{C_1 L_1}} = \frac{1}{\sqrt{C_2 L_2}} = \frac{1}{\sqrt{C_{33} L_3}} = \frac{1}{\sqrt{C_{34} L_4}} \qquad (6)$$

$$\frac{1}{C_3} = \frac{1}{C_{33}} + \frac{1}{C_{34}} \qquad (7)$$

In the following, the details of the mutual inductance adjuster 400 will be explained.

The mutual inductance adjuster 400 can adjust the first mutual inductance ($M_1$) by adjusting the positional relationship between the inductor 101 and the inductor 301, and can adjust the second mutual inductance ($M_2$) by adjusting the positional relationship between the inductor 201 and the inductor 302. More specifically, the mutual inductance adjuster 400 can adjust the first mutual inductance ($M_1$) through adjusting position, inclination and the like of either or both of the inductors 101 and 301. Similarly, the mutual inductance adjuster 400 can adjust the second mutual inductance ($M_2$) through adjusting position, inclination and the like of either or both of the inductors 201 and 302.

The mutual inductance adjuster 400 may adjust the first mutual inductance ($M_1$) through the adjustment of position, inclination and the like of an inserted member (not shown) provided in a gap between the inductor 101 and the inductor 301. Similarly, the mutual inductance adjuster 400 may adjust the second mutual inductance ($M_2$) through the adjustment of position, inclination and the like of an inserted member (not shown) provided in a gap between the inductor 201 and the inductor 302. Further, multiple types of inserted members can be prepared for selection, and the mutual inductance can be adjusted through the selection of those inserted members. Herein, an inserted member is used to change a magnetic flux of the inductors. An inserted member may be made of a metal, a dielectric material, or a magnetic material, or any combinations thereof.

The adjustment of a mutual inductance by the operation of the mutual inductance unit 400 is not necessarily automatic and dynamic. For example, when the wireless power transmission system shown in FIG. 1 is applied as a power-charging system using a cradle, a device to be charged (e.g., a mobile phone, a digital camera, a portable media player, etc.) is fixed to a cradle, and thus, the transmission condition between the cradle and the device can be considered to be relatively stable. In such a case, the first or second mutual inductance can be adjusted at a desired fixed value in advance. Accordingly, when at a time of designing, manufacturing, initial setting, setting changing or the like of a cradle (i.e., a power transmission apparatus) or a device to be charged (i.e., a power reception apparatus), the mutual inductance adjuster 400 can automatically operate to adjust the first or second mutual inductance at a desired fixed value. Or, at a time of designing, manufacturing, initial setting, setting changing or the like of a power transmission apparatus and a power reception apparatus, the mutual inductance adjuster 400 can be manually operated by a designer, a manufacturer, a user or the like to adjust the first or second mutual inductance at a desired fixed value.

As explained in the above, the wireless power transmission system according to the first embodiment comprises an adjustment circuit between a power transmission resonator and a power reception resonator. Further, the first mutual inductance related to a coupling between the power transmission resonator and the adjustment circuit and the second mutual inductance related to a coupling between the adjustment circuit and the power reception resonator are adjusted to come closer. Therefore, according to the wireless power transmission system, power transmission efficiency shows a peak at a predetermined resonant frequency of the power transmission resonator and the power reception resonator, regardless of amplitude of the first and second mutual inductances. In other words, according to the wireless power transmission system, degradation of power transmission efficiency caused by fluctuation of transmission conditions can be prevented.

(Second Embodiment)

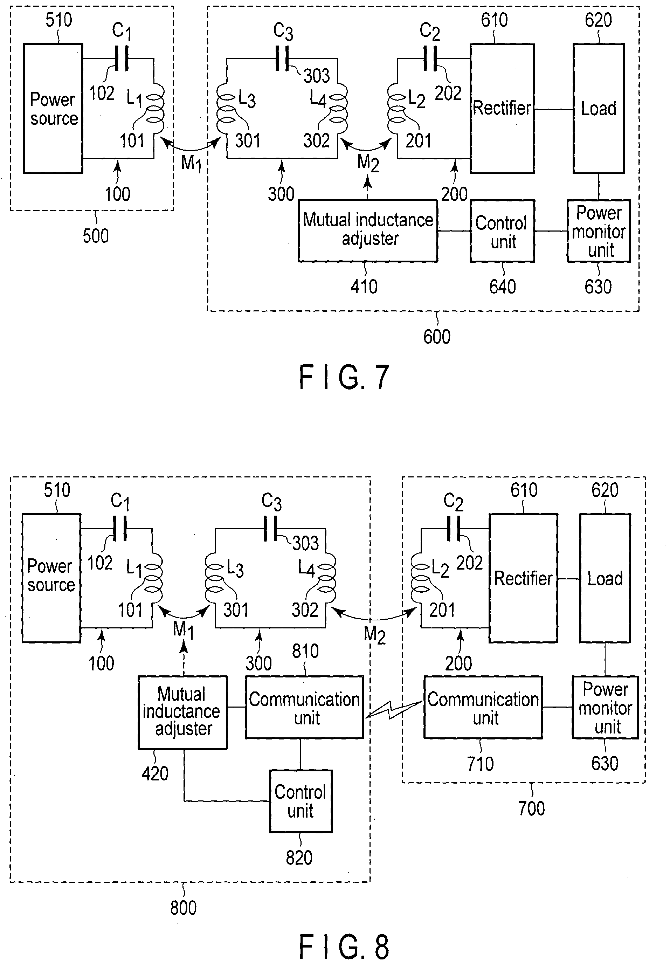

As shown in FIG. 7, a wireless power transmission system according to the second embodiment comprises a power transmission apparatus 500 and a power reception apparatus 600. The power transmission apparatus 500 comprises a resonator 100 and a power source 510. The power reception apparatus 600 comprises a resonator 200, an adjustment circuit 300, a mutual inductance adjuster 410, a rectifier 610, a load 620, a power monitor unit 630 and a control unit 640. In the present embodiment, the adjustment circuit 300 is incorporated in the power reception apparatus 600.

The power source 510 supplies AC power to the resonator 100. The power source 510 may supply AC power wirelessly to the resonator 100. Further, a component (not shown) that relays AC power may be provided between the power source 510 and the resonator 100.

The rectifier 610 receives AC power from the resonator 200, and rectifies the AC power to obtain DC power. The resonator 200 may supply AC power wirelessly to the rectifier 610. Further, a component (not shown) that relays AC power may be provided between the rectifier 610 and the resonator 200.

The load 620 is coupled to an output terminal of the rectifier 610, and receives DC power. The load 620 is a load circuit, a battery or the like, for example. Supplied DC power is immediately consumed, or temporarily accumulated (charging) by the load 620.

The power monitor unit 630 monitors an amount of DC power supplied to the load 620. For example, the power monitor unit 630 comprises a power meter. The power monitor unit 630 outputs information indicating an amount of DC power supplied to the load 620 to the control unit 640.

The control unit 640 adjusts the second mutual inductance (M2) by controlling the mutual inductance adjuster 410 in accordance with an amount of DC power supplied to the load 620. For example, the control unit 640 adjusts the second mutual inductance so as to increase (for example, to maximize) the amount of DC power supplied to the load 620.

As described above, the wireless power transmission system according to the second embodiment optimizes the second mutual inductance of a coupling between an adjustment circuit and a power reception resonator in accordance with an amount of DC power supplied to a load incorporated in a power reception apparatus. According to the wireless power transmission system, degradation of power transmission efficiency can be avoided even when a first mutual inductance of a coupling between a power transmission resonator and an adjustment circuit changes.

A communication unit (not shown) may be provided in each of the power transmission apparatus 500 and the power reception apparatus 600. The communication unit of the power transmission apparatus 500 transmits information indicating an amount of AC power supplied from the power source 510 wirelessly, for example. The communication unit of the power reception apparatus 600 receives the information wirelessly, for example, and outputs the information to the control unit 640. Then, the control unit 640 may calculate transmission efficiency based on the amount of AC power supplied from the power source 510 and the amount of DC power supplied to the load 620. Further, the control unit 640 may adjust the second mutual inductance so as to increase (for example, to maximize) transmission efficiency.

The communication unit of the power reception apparatus 600 may transmit information indicating a desired amount of power wirelessly, for example. The communication unit of the power transmission apparatus 500 may receive the information wirelessly, for example, and provides it to a power source control unit (not shown). If the power source control unit controls an amount of supplied power from the power source 510 in accordance with a desired amount of power, unnecessary power transmission by the power transmission apparatus 500 can be avoided, maintaining a power required by the power reception apparatus 600.

Further, the power reception apparatus 600 is typically a mobile electronic device, and thus, the power reception apparatus 600 greatly benefits from size reduction. Therefore, for example, it is effective to design inductors 201, 301, 302 so as to reduce their sizes based on Expressions 6 and 7.

(Third Embodiment)

As shown in FIG. 8, the wireless power transmission system according to the third embodiment comprises a power reception apparatus 700 and a power transmission apparatus 800. The power reception apparatus 700 comprises a resonator 200, a rectifier 610, a load 620, a power monitor unit 630, and a communication unit 710. The power transmission apparatus 800 comprises a resonator 100, an adjustment circuit 300, a mutual inductance adjuster 420, a power source 510, a communication unit 810, and a control unit 820.

The communication unit 710 inputs information indicating an amount of DC power supplied from the load 620 from the power monitor unit 630, and transmits the information wirelessly, for example. The communication unit 810 receives the information indicating an amount of DC power supplied from the load 620 wirelessly, for example, and outputs the information to the control unit 820.

The control unit 820 adjusts a first mutual inductance ($M_1$) by controlling the mutual inductance adjuster 420 in accordance with the amount of DC power supplied to the load 620. For example, the control unit 820 adjusts a first mutual inductance so as to increase (for example, to maximize) an amount of DC power supplied to the load 620. Or, the control unit 820 calculates transmission efficiency based on an amount of AC power supplied from the power source 510 and an amount of DC power supplied to the load 620, and adjusts a first mutual inductance so as to increase (for example, to maximize) transmission efficiency.

The mutual inductance adjuster 420 adjusts a first mutual inductance ($M_1$) in accordance with control from the control unit 820. The mutual inductance adjuster 420 can adjust a first mutual inductance ($M_1$) using various methods as aforementioned.

As described above, the wireless power transmission system according to the third embodiment optimizes a first mutual inductance of a coupling between a transmission resonator and an adjustment circuit in accordance with an amount of DC power supplied to a load incorporated in a power reception apparatus. According to the wireless power transmission system, degradation of power transmission efficiency can be avoided even when a second mutual inductance of a coupling between an adjustment circuit and a power reception resonator changes. Further, since there is no need to incorporate a mutual inductance adjuster and a control unit, etc., to a power reception apparatus, it is easy to reduce the size of a power reception apparatus. As the power reception apparatus 600 is typically a mobile electronic device, the power reception apparatus 600 greatly benefits from size reduction.

The communication unit 710 may transmit information indicating a desired amount of power wirelessly, for example. And the communication unit 810 receives the information wirelessly, for example, and provides it to a power source control unit (not shown). If the power source control unit controls power supplied from the power source 510 in accordance with a desired amount of power, unnecessary power transmission by the power transmission apparatus 800 can be avoided, maintaining a power required by the power reception apparatus 700.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

**Claims**

1.  A wireless power transmission system comprising:

    a first resonator (100) including a first inductor (101) and having a first resonant frequency;
    a second resonator (200) including a second inductor (201) and having the first resonant frequency;
    an adjustment circuit (300) including a third inductor (301) that receives AC power from the first inductor (100) through a coupling with a first mutual inductance, a fourth inductor (302) transmitting the AC power to the second inductor (201) through a coupling with a second mutual inductance, and a capacitor (303) being connected in series with the third inductor (301) and the fourth inductor (302); and
    an adjuster (400) configured to adjust at least either one of the first mutual inductance or the second mutual inductance, wherein
    the adjuster (400) is configured to adjust at least either one of the first mutual inductance or the second mutual inductance such that the first mutual inductance equals the second mutual inductance, and
    the adjuster (400) is configured to adjust at least either one of a first positional relationship between the first inductor (101) and the third inductor (301) or a second positional relationship between the second inductor (201) and the fourth inductor (302).

2. A wireless power transmission system comprising:

a first resonator (100) including a first inductor (101) and having a first resonant frequency;
a second resonator (200) including a second inductor (201) and having the first resonant frequency;
an adjustment circuit (300) including a third inductor (301) that receives AC power from the first inductor (100) through a coupling with a first mutual inductance, a fourth inductor (302) transmitting the AC power to the second inductor (201) through a coupling with a second mutual inductance, and a capacitor (303) being connected in series with the third inductor (301) and the fourth inductor (302);
an inserted member provided on either one of a gap between the first inductor (101) and the third inductor (301) or a gap between the second inductor (201) and the fourth inductor (302); and
an adjuster (400) configured to adjust at least either one of the first mutual inductance or the second mutual inductance, wherein
the adjuster (400) is configured to adjust at least either one of the first mutual inductance or the second mutual inductance such that the first mutual inductance equals the second mutual inductance, and
the adjuster (400) is configured to adjust at least one of a position or an inclination of the inserted member.

3. The system according to claim 1 or claim 2, further comprising:

a power source (510) to supply the AC power to the first resonator (100);
a rectifier (610) to receive the AC power from the second resonator (200) and rectify the AC power to obtain DC power; and
a load (620) to receive the DC power, and wherein
the first resonator (100) is incorporated in a power transmission apparatus,
the adjustment circuit (300) and the second resonator (200) are incorporated in a power reception apparatus, and
the adjuster (400) is configured to adjust the second mutual inductance.

4. The system according to claim 3, further comprising:

a monitor unit (630) configured to monitor an amount of the DC power; and
a control unit (640) configured to adjust the second mutual inductance by controlling the adjuster (400) in accordance with the amount of the DC power.

5. The system according to claim 1 or claim 2, further comprising:

a power source (510) to supply the AC power to the first resonator (100);
a rectifier (610) to receive the AC power from the second resonator (200) and rectify the AC power to obtain DC power;
a load (620) to receive the DC power, and wherein
the first resonator (100) and the adjustment circuit (300) are incorporated in a power transmission apparatus,
the second resonator (200) is incorporated in the power reception apparatus, and
the adjuster (400) is configured to adjust the first mutual inductance.

6. The system according to claim 5, further comprising:

a monitor unit (630) configured to monitor an amount of the DC power;
a first communication unit (710) configured to transmit information indicating the amount of the DC power;
a second communication unit (810) configured to receive the information indicating the amount of the DC power; and
a control unit (820) configured to adjust the first mutual inductance by controlling the adjuster (400) in accordance with the amount of the DC power.

7. A power reception apparatus comprising:

a first resonator (200) including a first inductor (201) and having a first resonant frequency;
an adjustment circuit (300) including a third inductor (301) that receives AC power from a second inductor (101) included in a second resonator (100) having the first resonant frequency through a coupling with a first mutual inductance, a fourth inductor (302) transmitting the AC power to the first inductor (201) through a coupling with a second mutual inductance, and a capacitor (303) being connected in series with the third inductor (301) and

EP 2 761 768 B1

the fourth inductor (302); and
an adjuster (400) configured to adjust the second mutual inductance, wherein
the adjuster (400) is configured to adjust the second mutual inductance such that the first mutual inductance equals the second mutual inductance, and
the adjuster (400) is configured to adjust at least either one of a first positional relationship between the first inductor (201) and the third inductor (301) or a second positional relationship between the second inductor (101) and the fourth inductor (302).

8. A power reception apparatus comprising:

a first resonator (200) including a first inductor (201) and having a first resonant frequency;
an adjustment circuit (300) including a third inductor (301) that receives AC power from a second inductor (101) included in a second resonator (100) having the first resonant frequency through a coupling with a first mutual inductance, a fourth inductor (302) transmitting the AC power to the first inductor (201) through a coupling with a second mutual inductance, and a capacitor (303) being connected in series with the third inductor (301) and the fourth inductor (302);
an inserted member provided on either one of a gap between the first inductor (201) and the third inductor (301) or a gap between the second inductor (101) and the fourth inductor (302); and
an adjuster (400) configured to adjust the second mutual inductance, wherein
the adjuster (400) is configured to adjust the second mutual inductance such that the first mutual inductance equals the second mutual inductance, and
the adjuster (400) is configured to adjust at least one of a position or a inclination of the inserted member.

9. The power reception apparatus according to Claim 7 or Claim 8, further comprising:

a rectifier (610) to receive the AC power from the first resonator (200) and rectify the AC power to obtain DC power; and
a load (620) to receive the DC power, and wherein
the adjuster (400) is configured to adjust the second mutual inductance.

10. A power transmission apparatus comprising:

a first resonator (100) including a first inductor (101) and having a first resonant frequency;
an adjustment circuit (300) including a third inductor (301) that receives AC power from the first inductor (101) through a coupling with a first mutual inductance, a fourth inductor (302) transmitting the AC power to a second inductor (201) included in a second resonator (200) having the first resonant frequency through a coupling with a second mutual inductance, and a capacitor (303) being connected in series with the third inductor (301) and the fourth inductor (302); and
an adjuster (400) configured to adjust the first mutual inductance, wherein
the adjuster (400) is configured to adjust the first mutual inductance such that the first mutual inductance equals the second mutual inductance, and
the adjuster (400) is configured to adjust at least either one of a first positional relationship between the first inductor (101) and the third inductor (301) or a second positional relationship between the second inductor (201) and the fourth inductor (302).

11. A power transmission apparatus comprising:

a first resonator (100) including a first inductor (101) and having a first resonant frequency;
an adjustment circuit (300) including a third inductor (301) that receives AC power from the first inductor (101) through a coupling with a first mutual inductance, a fourth inductor (302) transmitting the AC power to a second inductor (201) included in a second resonator (200) having the first resonant frequency through a coupling with a second mutual inductance, and a capacitor (303) being connected in series with the third inductor (301) and the fourth inductor (302);
an inserted member provided on either one of a gap between the first inductor (101) and the third inductor (301) or a gap between the second inductor (201) and the fourth inductor (302); and
an adjuster (400) configured to adjust the first mutual inductance, wherein
the adjuster (400) is configured to adjust the first mutual inductance such that the first mutual inductance equals the second mutual inductance, and

9

the adjuster (400) is configured to adjust at least one of a position or a inclination of the inserted member.

12. The power transmission apparatus according to Claim 10 or Claim 11, further comprising:

a power source (510) to supply the AC power to the first resonator (100), and wherein
the adjuster (400) is configured to adjust the second mutual inductance.


**Patentansprüche**

1. Drahtloses Energieübertragungssystem, umfassend:

einen ersten Resonator (100), der einen ersten Induktor (101) umfasst und eine erste Resonanzfrequenz aufweist;
einen zweiten Resonator (200), der einen zweiten Induktor (201) umfasst und die erste Resonanzfrequenz aufweist;
eine Regelschaltung (300), die einen dritten Induktor (301), der Wechselstromleistung von dem ersten Induktor (100) durch eine Kopplung mit einer ersten Gegeninduktivität aufnimmt, einen vierten Induktor (302), der die Wechselstromleistung durch eine Kopplung mit einer zweiten Gegeninduktivität auf den zweiten Induktor (201) überträgt, und einen Kondensator (303), der mit dem dritten Induktor (301) und dem vierten Induktor (302) in Reihe geschaltet ist, umfasst; und
einen Einsteller (400), der so konfiguriert ist, dass er zumindest eine von der ersten Gegeninduktivität oder der zweiten Gegeninduktivität einstellt, wobei
der Einsteller (400) so konfiguriert ist, dass er zumindest eine von der ersten Gegeninduktivität oder der zweiten Gegeninduktivität so einstellt, dass die erste Gegeninduktivität der zweiten Gegeninduktivität gleicht, und
der Einsteller (400) so konfiguriert ist, dass er zumindest eine von einer ersten Lagebeziehung zwischen dem ersten Induktor (101) und dem dritten Induktor (301) oder einer zweiten Lagebeziehung zwischen dem zweiten Induktor (201) und dem vierten Induktor (302) einstellt.

2. Drahtloses Energieübertragungssystem, umfassend:

einen ersten Resonator (100), der einen ersten Induktor (101) umfasst und eine erste Resonanzfrequenz aufweist;
einen zweiten Resonator (200), der einen zweiten Induktor (201) umfasst und die erste Resonanzfrequenz aufweist;
eine Regelschaltung (300), die einen dritten Induktor (301), der Wechselstromleistung von dem ersten Induktor (100) durch eine Kopplung mit einer ersten Gegeninduktivität aufnimmt, einen vierten Induktor (302), der die Wechselstromleistung durch eine Kopplung mit einer zweiten Gegeninduktivität auf den zweiten Induktor (201) überträgt, und einen Kondensator (303), der mit dem dritten Induktor (301) und dem vierten Induktor (302) in Reihe geschaltet ist, umfasst;
ein Einsatzbauteil, das an einem Spalt zwischen dem ersten Induktor (101) und dem dritten Induktor (301) oder einem Spalt zwischen dem zweiten Induktor (201) und dem vierten Induktor (302) vorgesehen ist; und
einen Einsteller (400), der so konfiguriert ist, dass er zumindest eine von der ersten Gegeninduktivität oder der zweiten Gegeninduktivität einstellt, wobei
der Einsteller (400) so konfiguriert ist, dass er zumindest eine von der ersten Gegeninduktivität oder der zweiten Gegeninduktivität so einstellt, dass die erste Gegeninduktivität der zweiten Gegeninduktivität gleicht, und
der Einsteller (400) so konfiguriert ist, dass er zumindest eines von der Position oder der Neigung des Einsatzbauteils einstellt.

3. System nach Anspruch 1 oder Anspruch 2, weiter umfassend:

eine Energiequelle (510), die den ersten Resonator (100) mit Wechselstromleistung versorgt;
einen Gleichrichter (610), der die Wechselstromleistung von dem zweiten Resonator (200) aufnimmt und die Wechselstromleistung unter Erhalt von Gleichstromleistung gleichrichtet; und
einen Lastwiderstand (620), der die Gleichstromleistung aufnimmt, und wobei
der erste Resonator (100) in ein Energieübertragungsgerät eingebaut ist,
die Regelschaltung (300) und der zweite Resonator (200) in ein Energieaufnahmegerät eingebaut sind, und
der Einsteller (400) so konfiguriert ist, dass er die zweite Gegeninduktivität einstellt.

4.  System nach Anspruch 3, weiter umfassend:

    eine Überwachungseinheit (630), die so konfiguriert ist, dass sie die Menge der Gleichstromleistung überwacht; und
    eine Steuereinheit (640), die so konfiguriert ist, dass sie die zweite Gegeninduktivität durch die Steuerung des Einstellers (400) entsprechend der Menge der Gleichstromleistung einstellt.

5.  System nach Anspruch 1 oder Anspruch 2, weiter umfassend:

    eine Energiequelle (510), die den ersten Resonator (100) mit der Wechselstromleistung versorgt;
    einen Gleichrichter (610), der die Wechselstromleistung von dem zweiten Resonator (200) aufnimmt und die Wechselstromleistung unter Erhalt von Gleichstromleistung gleichrichtet;
    einen Lastwiderstand (620), der die Gleichstromleistung aufnimmt, und wobei
    der erste Resonator (100) und die Regelschaltung (300) in ein Energieübertragungsgerät eingebaut sind,
    der zweite Resonator (200) in das Energieaufnahmegerät eingebaut ist und
    der Einsteller (400) so konfiguriert ist, dass er die erste Gegeninduktivität einstellt.

6.  System nach Anspruch 5, weiter umfassend:

    eine Überwachungseinheit (630), die so konfiguriert ist, dass sie die Menge der Gleichstromleistung überwacht;
    eine erste Kommunikationseinheit (710), die so konfiguriert ist, dass sie Informationen, die die Menge der Gleichstromleistung angeben, übermittelt;
    eine zweite Kommunikationseinheit (810), die so konfiguriert ist, dass sie die Informationen, die die Menge der Gleichstromleistung angeben, empfängt; und
    eine Steuereinheit (820), die so konfiguriert ist, dass sie die erste Gegeninduktivität durch die Steuerung des Einstellers (400) entsprechend der Menge der Gleichstromleistung einstellt.

7.  Leistungsaufnahmegerät, umfassend:

    einen ersten Resonator (200), der einen ersten Induktor (201) umfasst und eine erste Resonanzfrequenz aufweist;
    eine Regelschaltung (300), die einen dritten Induktor (301), der Wechselstromleistung von einem zweiten Induktor (101), der in einem zweiten Resonator (100) mit der ersten Resonanzfrequenz enthalten ist, durch eine Kopplung mit einer ersten Gegeninduktivität aufnimmt, einen vierten Induktor (302), der die Wechselstromleistung durch eine Kopplung mit einer zweiten Gegeninduktivität auf den ersten Induktor (201) überträgt, und einen Kondensator (303), der mit dem dritten Induktor (301) und dem vierten Induktor (302) in Reihe geschaltet ist, umfasst; und
    einen Einsteller (400), der so konfiguriert ist, dass er die zweite Gegeninduktivität einstellt, wobei
    der Einsteller (400) so konfiguriert ist, dass er die zweite Gegeninduktivität so einstellt, dass die erste Gegeninduktivität der zweiten Gegeninduktivität gleicht, und
    der Einsteller (400) so konfiguriert ist, dass er zumindest eines von einer ersten Lagebeziehung zwischen dem ersten Induktor (201) und dem dritten Induktor (301) oder einer zweiten Lagebeziehung zwischen dem zweiten Induktor (101) und dem vierten Induktor (302) einstellt.

8.  Leistungsaufnahmegerät, umfassend:

    einen ersten Resonator (200), der einen ersten Induktor (201) umfasst und eine erste Resonanzfrequenz aufweist;
    eine Regelschaltung (300), die einen dritten Induktor (301), der Wechselstromleistung von einem zweiten Induktor (101), der in einem zweiten Resonator (100) mit der ersten Resonanzfrequenz enthalten ist, durch eine Kopplung mit einer ersten Gegeninduktivität aufnimmt, einen vierten Induktor (302), der die Wechselstromleistung durch eine Kopplung mit einer zweiten Gegeninduktivität auf den ersten Induktor (201) überträgt, und einen Kondensator (303), der mit dem dritten Induktor (301) und dem vierten Induktor (302) in Reihe geschaltet ist, umfasst;
    ein Einsatzbauteil, das in einem von einem Spalt zwischen dem ersten Induktor (201) und dem dritten Induktor (301) oder einem Spalt zwischen dem zweiten Induktor (101) und dem vierten Induktor (302) vorgesehen ist; und
    einen Einsteller (400), der so konfiguriert ist, dass er die zweite Gegeninduktivität einstellt, wobei
    der Einsteller (400) so konfiguriert ist, dass er die zweite Gegeninduktivität so einstellt, dass die erste Gegeninduktivität der zweiten Gegeninduktivität gleicht, und

der Einsteller (400) so konfiguriert ist, dass er zumindest eines von der Position oder der Neigung des Einsatzbauteils einstellt.

9. Leistungsaufnahmegerät nach Anspruch 7 oder Anspruch 8, weiter umfassend:

einen Gleichrichter (610), der die Wechselstromleistung von dem ersten Resonator (200) aufnimmt und die Wechselstromleistung unter Erhalt von Gleichstromleistung gleichrichtet; und

einen Lastwiderstand (620), der die Gleichstromleistung aufnimmt, und wobei

der Einsteller (400) so konfiguriert ist, dass er die zweite Gegeninduktivität einstellt.

10. Energieübertragungsgerät, umfassend:

einen ersten Resonator (100), der einen ersten Induktor (101) umfasst und eine erste Resonanzfrequenz aufweist;

eine Regelschaltung (300), die einen dritten Induktor (301), der Wechselstromleistung von dem ersten Induktor (101) durch eine Kopplung mit einer ersten Gegeninduktivität aufnimmt, einen vierten Induktor (302), der die Wechselstromleistung durch eine Kopplung mit einer zweiten Gegeninduktivität auf einen zweiten Induktor (201) überträgt, der in einem zweiten Resonator (200) mit der ersten Resonanzfrequenz enthalten ist, und einen Kondensator (303), der mit dem dritten Induktor (301) und dem vierten Induktor (302) in Reihe geschaltet ist, umfasst; und

einen Einsteller (400), der so konfiguriert ist, dass er die erste Gegeninduktivität einstellt, wobei

der Einsteller (400) so konfiguriert ist, dass er die erste Gegeninduktivität so einstellt, dass die erste Gegeninduktivität der zweiten Gegeninduktivität gleicht, und

der Einsteller (400) so konfiguriert ist, dass er zumindest eine von einer ersten Lagebeziehung zwischen dem ersten Induktor (101) und dem dritten Induktor (301) oder einer zweiten Lagebeziehung zwischen dem zweiten Induktor (201) und dem vierten Induktor (302) einstellt.

11. Energieübertragungsgerät, umfassend:

einen ersten Resonator (100), der einen ersten Induktor (101) umfasst und eine erste Resonanzfrequenz aufweist;

eine Regelschaltung (300), die einen dritten Induktor (301), der Wechselstromleistung von dem ersten Induktor (101) durch eine Kopplung mit einer ersten Gegeninduktivität aufnimmt, einem viertem Induktor (302), der die Wechselstromleistung durch eine Kopplung mit einer zweiten Gegeninduktivität auf den zweiten Induktor (201) überträgt, der in einem zweiten Resonator (200) mit der ersten Resonanzfrequenz enthalten ist, und einen Kondensator (303), der mit dem dritten Induktor (301) und dem vierten Induktor (302) in Reihe geschaltet ist, umfasst;

ein Einsatzbauteil, das in einem von einem Spalt zwischen dem ersten Induktor (101) und dem dritten Induktor (301) oder einem Spalt zwischen dem zweiten Induktor (201) und dem vierten Induktor (302) vorgesehen ist; und

einen Einsteller (400), der so konfiguriert ist, dass er die erste Gegeninduktivität einstellt, wobei

der Einsteller (400) so konfiguriert ist, dass er die erste Gegeninduktivität so einstellt, dass die erste Gegeninduktivität der zweiten Gegeninduktivität gleicht, und

der Einsteller (400) so konfiguriert ist, dass er zumindest eines von einer Position oder einer Neigung des Einsatzbauteils einstellt.

12. Energieübertragungsgerät nach Anspruch 10 oder Anspruch 11, weiter umfassend:

eine Energiequelle (510), die den ersten Resonator (100) mit der Wechselstromleistung versorgt, und wobei

der Einsteller (400) so konfiguriert ist, dass er die zweite Gegeninduktivität einstellt.

**Revendications**

1. Système de transmission d'énergie sans fil comprenant :

un premier résonateur (100) comprenant une première inductance (101) et ayant une première fréquence de résonance ;

un deuxième résonateur (200) comprenant une deuxième inductance (201) et ayant la première fréquence de résonance ;

un circuit de réglage (300) comprenant une troisième inductance (301) qui reçoit une puissance CA à partir de la première inductance (100) par le biais d'un couplage avec une première inductance mutuelle, une quatrième inductance (302) transmettant la puissance CA à la deuxième inductance (201) par le biais d'un couplage avec une deuxième inductance mutuelle, et un condensateur (303) qui est connecté en série avec la troisième inductance (301) et la quatrième inductance (302) ; et

un dispositif de réglage (400) configuré pour régler au moins l'une ou l'autre de la première inductance mutuelle et de la deuxième inductance mutuelle, dans lequel

le dispositif de réglage (400) est configuré pour régler au moins l'une ou l'autre de la première inductance mutuelle et de la deuxième inductance mutuelle de manière que la première inductance mutuelle soit égale à la deuxième inductance mutuelle, et

le dispositif de réglage (400) est configuré pour régler au moins l'une ou l'autre d'une première relation de position entre la première inductance (101) et la troisième inductance (301) et d'une deuxième relation de position entre la deuxième inductance (201) et la quatrième inductance (302).

2. Système de transmission d'énergie sans fil comprenant :

un premier résonateur (100) comprenant une première inductance (101) et ayant une première fréquence de résonance ;

un deuxième résonateur (200) comprenant une deuxième inductance (201) et ayant la première fréquence de résonance ;

un circuit de réglage (300) comprenant une troisième inductance (301) qui reçoit une puissance CA à partir de la première inductance (100) par le biais d'un couplage avec une première inductance mutuelle, une quatrième inductance (302) transmettant la puissance CA à la deuxième inductance (201) par le biais d'un couplage avec une deuxième inductance mutuelle, et un condensateur (303) qui est connecté en série avec la troisième inductance (301) et la quatrième inductance (302) ;

un élément inséré disposé sur l'un ou l'autre d'un espace entre la première inductance (101) et la troisième inductance (301) et un espace entre la deuxième inductance (201) et la quatrième inductance (302) ; et

un dispositif de réglage (400) configuré pour régler au moins l'une ou l'autre de la première inductance mutuelle et de la deuxième inductance mutuelle, dans lequel

le dispositif de réglage (400) est configuré pour régler au moins l'une ou l'autre de la première inductance mutuelle et de la deuxième inductance mutuelle de manière que la première inductance mutuelle soit égale à la deuxième inductance mutuelle, et

le dispositif de réglage (400) est configuré pour régler au moins une d'une position ou d'une inclinaison de l'élément inséré.

3. Système selon la revendication 1 ou la revendication 2, comprenant en outre :

une source d'énergie (510) pour délivrer la puissance CA au premier résonateur (100) ;

un redresseur (610) pour recevoir la puissance CA à partir du deuxième résonateur (200) et redresser la puissance CA pour obtenir une puissance CC ; et

une charge (620) pour recevoir la puissance CC, et dans lequel

le premier résonateur (100) est incorporé dans un appareil de transmission d'énergie,

le circuit de réglage (300) et le deuxième résonateur (200) sont incorporés dans un appareil de réception d'énergie, et

le dispositif de réglage (400) est configuré pour régler la deuxième inductance mutuelle.

4. Système selon la revendication 3, comprenant en outre :

une unité de surveillance (630) configurée pour surveiller une quantité de la puissance CC ; et

une unité de commande (640) configurée pour régler la deuxième inductance mutuelle en commandant le dispositif de réglage (400) en fonction de la quantité de la puissance CC

5. Système selon la revendication 1 ou la revendication 2, comprenant en outre :

une source d'énergie (510) pour délivrer la puissance CA au premier résonateur (100) ;

un redresseur (610) pour recevoir la puissance CA à partir du deuxième résonateur (200) et redresser la puissance CA pour obtenir une puissance CC ;

une charge (620) pour recevoir la puissance CC, et dans lequel

le premier résonateur (100) et le circuit de réglage (300) sont incorporés dans un appareil de transmission d'énergie,

le deuxième résonateur (200) est incorporé dans l'appareil de réception d'énergie, et

le dispositif de réglage (400) est configuré pour régler la première inductance mutuelle.

6. Système selon la revendication 5, comprenant en outre :

une unité de surveillance (630) configurée pour surveiller une quantité de la puissance CC ;

une première unité de communication (710) configurée pour transmettre des informations indiquant la quantité de la puissance CC ;

une deuxième unité de communication (810) configurée pour recevoir les informations indiquant la quantité de la puissance CC ; et

une unité de commande (820) configurée pour régler la première inductance mutuelle en commandant le dispositif de réglage (400) en fonction de la quantité de la puissance CC

7. Appareil de réception d'énergie comprenant :

un premier résonateur (200) comprenant une première inductance (201) et ayant une première fréquence de résonance ;

un circuit de réglage (300) comprenant une troisième inductance (301) qui reçoit une puissance CA à partir d'une deuxième inductance (101) comprise dans un deuxième résonateur (100) ayant la première fréquence de résonance par le biais d'un couplage avec une première inductance mutuelle, une quatrième inductance (302) transmettant la puissance CA à la première inductance (201) par le biais d'un couplage avec une deuxième inductance mutuelle, et un condensateur (303) qui est connecté en série avec la troisième inductance (301) et la quatrième inductance (302) ; et

un dispositif de réglage (400) configuré pour régler la deuxième inductance mutuelle, dans lequel

le dispositif de réglage (400) est configuré pour régler la deuxième inductance mutuelle de manière que la première inductance mutuelle soit égale à la deuxième inductance mutuelle, et

le dispositif de réglage (400) est configuré pour régler au moins l'une ou l'autre d'une première relation de position entre la première inductance (201) et la troisième inductance (301) et d'une deuxième relation de position entre la deuxième inductance (101) et la quatrième inductance (302).

8. Appareil de réception d'énergie comprenant :

un premier résonateur (200) comprenant une première inductance (201) et ayant une première fréquence de résonance ;

un circuit de réglage (300) comprenant une troisième inductance (301) qui reçoit une puissance CA à partir d'une deuxième inductance (101) comprise dans un deuxième résonateur (100) ayant la première fréquence de résonance par le biais d'un couplage avec une première inductance mutuelle, une quatrième inductance (302) transmettant la puissance CA à la première inductance (201) par le biais d'un couplage avec une deuxième inductance mutuelle, et un condensateur (303) qui est connecté en série avec la troisième inductance (301) et la quatrième inductance (302) ;

un élément inséré disposé sur l'un ou l'autre d'un espace entre la première inductance (201) et la troisième inductance (301) et un espace entre la deuxième inductance (101) et la quatrième inductance (302) ; et

un dispositif de réglage (400) configuré pour régler la deuxième inductance mutuelle, dans lequel

le dispositif de réglage (400) est configuré pour régler la deuxième inductance mutuelle de manière que la première inductance mutuelle soit égale à la deuxième inductance mutuelle, et

le dispositif de réglage (400) est configuré pour régler au moins une d'une position ou d'une inclinaison de l'élément inséré.

9. Appareil de réception d'énergie selon la revendication 7 ou la revendication 8, comprenant en outre :

un redresseur (610) pour recevoir la puissance CA à partir du premier résonateur (200) et redresser la puissance CA pour obtenir une puissance CC ; et

une charge (620) pour recevoir la puissance CC, et dans lequel

le dispositif de réglage (400) est configuré pour régler la deuxième inductance mutuelle.

**10.** Appareil de transmission d'énergie comprenant :

un premier résonateur (100) comprenant une première inductance (101) et ayant une première fréquence de résonance ;
un circuit de réglage (300) comprenant une troisième inductance (301) qui reçoit une puissance CA à partir d'une première inductance (101) par le biais d'un couplage avec une première inductance mutuelle, une quatrième inductance (302) transmettant la puissance CA à la deuxième inductance (201) comprise dans un deuxième résonateur (200) ayant la première fréquence de résonance par le biais d'un couplage avec une deuxième inductance mutuelle, et un condensateur (303) qui est connecté en série avec la troisième inductance (301) et la quatrième inductance (302) ; et
un dispositif de réglage (400) configuré pour régler la première inductance mutuelle, dans lequel
le dispositif de réglage (400) est configuré pour régler la première inductance mutuelle de manière que la première inductance mutuelle soit égale à la deuxième inductance mutuelle, et
le dispositif de réglage (400) est configuré pour régler au moins l'une ou l'autre d'une première relation de position entre la première inductance (101) et la troisième inductance (301) et d'une deuxième relation de position entre la deuxième inductance (201) et la quatrième inductance (302).

**11.** Appareil de transmission d'énergie comprenant :

un premier résonateur (100) comprenant une première inductance (101) et ayant une première fréquence de résonance ;
un circuit de réglage (300) comprenant une troisième inductance (301) qui reçoit une puissance CA à partir de la première inductance (101) par le biais d'un couplage avec une première inductance mutuelle, une quatrième inductance (302) transmettant la puissance CA à une deuxième inductance (201) comprise dans un deuxième résonateur (200) ayant la première fréquence de résonance par le biais d'un couplage avec une deuxième inductance mutuelle, et un condensateur (303) qui est connecté en série avec la troisième inductance (301) et la quatrième inductance (302) ;
un élément inséré disposé sur l'un ou l'autre d'un espace entre la première inductance (101) et la troisième inductance (301) et un espace entre la deuxième inductance (201) et la quatrième inductance (302) ; et
un dispositif de réglage (400) configuré pour régler la première inductance mutuelle, dans lequel
le dispositif de réglage (400) est configuré pour régler la première inductance mutuelle de manière que la première inductance mutuelle soit égale à la deuxième inductance mutuelle, et
le dispositif de réglage (400) est configuré pour régler au moins une d'une position ou d'une inclinaison de l'élément inséré.

**12.** Dispositif de transmission d'énergie selon la revendication 10 ou la revendication 11, comprenant en outre :

une source d'énergie (510) pour délivrer la puissance CA au premier résonateur (100), et dans lequel
le dispositif de réglage (400) est configuré pour régler la deuxième inductance mutuelle.

F I G. 1

F I G. 2

F I G. 3

FIG. 4

F I G. 5

F I G. 6

F I G. 7

F I G. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011133569 A1
- EP 1385120 A1
- JP 2004343410 A
- WO 2010006078 A1

### Non-patent literature cited in the description

- Wireless Power Transfer via Strongly Coupled Magnetic Resonances. *Science,* 06 July 2007, vol. 37 (5834), 83-86
- **HERMANN A. HAUS ; WEIPING HUANG.** Coupled-Mode Theory. *Proceedings of the IEEE,* October 1991, vol. 79 (10